# EUROPÄISCHE PATENTANMELDUNG

(11) **EP 0 906 779 A1**
(43) Veröffentlichungstag der Anmeldung: **07.04.1999**
(21) Anmeldenummer: 98118573.9
(22) Anmeldetag: 01.10.1998
(51) Int. Cl.: B01D 47/10, B01D 53/86

(54) **Verfahren und Vorrichtung zur Entfernung von Wasserstoff und/oder Kohlenmonoxid aus einem Luftstrom**

(30) Priorität: 02.10.1997 DE 19743733; 29.09.1998 EP
(71) Anmelder: Linde Aktiengesellschaft, 65189 Wiesbaden (DE)
(72) Erfinder: von Gemmingen, Ulrich, Dr. Dipl.-Phys., 80797 München (DE)

(57) **Zusammenfassung**

Das Verfahren dient zur Entfernung von Kohlenmonoxid und/oder Wasserstoff aus einem Luftstrom durch katalytische Oxidation. Aus dem Luftstrom werden stromaufwärts der katalytischen Oxidation Stäube und/oder Aerosole einer Partikelgröße von weniger als 20 µm entfernt.

## Beschreibung

Die Erfindung betrifft ein Verfahren zur Entfernung von Kohlenmonoxid und/oder Wasserstoff aus einem Luftstrom, bei dem der Luftstrom einer katalytischen Oxidation unterworfen wird.

Für die Produktion von Halbleiterelementen wird ultrahochreiner Stickstoff mit geringsten Anteilen (beispielsweise unter 1 Vppm) an reduzierenden Komponenten wie Wasserstoff und Kohlenmonoxid benötigt. Beispielsweise bei der Herstellung von solchem ultrahochreinen Stickstoff ist es bekannt; aus der Ansaugluft einer Luftzerlegungsanlage Verunreinigungen wie Kohlenmonoxid und Wasserstoff durch katalytische Oxidation von Kohlenmonoxid zu Kohlendioxid und/oder Wasserstoff zu Wasser an Katalysatorschichten mittels Feststoffkatalysatoren zu entfernen. Das Katalysatormaterial kann aus Hopcalit (Gemisch von Oxiden und/oder Peroxiden von Mangan, Silber, Kobalt und/oder Kupfer) bestehen, oder aus einer Schüttung von Aluminiumoxid, in/auf das Palladium-oder Platin oder auch Ruthenium, Osmium, Iridium, oder Rhodium implementiert beziehungsweise aufgebracht ist. Das Katalysatorbett kann direkt hinter dem Luftverdichter angeordnet und bei erhöhter Temperatur von etwa 160°C betrieben werden. Alternativ dazu ist die Anordnung des Katalysatorbetts in dem Behälter möglich, in dem sich auch das Molekularsieb für die Trocknung der Luft befindet.

Beispiele für die Erzeugung Reinigung von Einsatzluft für eine Luftzerlegungsanlage für die Erzeugung eines ultrareinen Gases finden sich in EP-0 438 282-A1 und EP-0 454 531-A1. Gemäß EP-0 438 282-A1 wird aus dem Einsatzluftstrom zunächst durch Adsorption Wasser entfernt; danach werden in je einer Schicht Hopcalits und Palladium-aktivierten Aluminiumoxids Kohlenmonoxid und Wasserstoff bei Umgebungstemperaturen von 0 bis 50°C umgewandelt und schließlich werden Restwasser, Kohlendioxid und Kohlenwasserstoffe adsorptiv entfernt. Mit den bekannten Verfahren sind typischerweise Abreicherungen von Kohlenmonoxid und Wasserstoff um einen Faktor 20 möglich.

Der Erfindung liegt die Aufgabe zugrunde, ein Verfahren und eine Vorrichtung der eingangs genannten Art anzugeben, die einen besonders hohen Abreicherungsgrad an Kohlenmonoxid und/oder Wasserstoff im Luftstrom bewirken.

Diese Erhöhung der Katalysatoraktivität wird im Rahmen der Erfindung dadurch bewirkt, daß stromaufwärts der katalytischen Oxidation Stäube und/oder Aerosole einer Partikelgröße von weniger als 20 µm aus dem Luftstrom entfernt werden.

Unter Partikelgröße wird dabei der Durchmesser der Teilchen verstanden. Bei Partikeln, deren Form von der Kugelgestalt abweicht, ist der hydraulische Durchmesser, also das Sechsfache des Verhältnisses von Volumen und äußerer Oberfläche gemeint.

Wie bereits die ältere, nicht vorveröffentlichte europäische Patentanmeldung 0 799 633 setzt die vorliegende Erfindung bei der Erkenntnis an, daß Schadstoffkomponenten, die in dem Luftstrom enthalten sind, die Aktivität des Katalysatormaterials vermindern. Es hat sich jedoch herausgestellt, daß mit den in EP 0 799 633 genannten Maßnahmen zur Entfernung von Schadstoffen in gasförmigem Zustand nur eine begrenzte Wirkung erzielt werden kann. Im Rahmen der vorliegenden Erfindung wurde entdeckt, daß die Beladung der Luft mit festen und flüssigen Schadstoffen in Form von Aerosolen und Stäuben, insbesondere von beladenen Stäuben und schadstoffimprägniertem Ruß eine wichtige Rolle für die Katalysatoraktivität spielt.

Schädliche Stäube und Aerosole einer Partikelgröße von weniger als 20 µm durchströmen nämlich die üblichen mechanischen Filter und eine Molekularsiebschüttung im wesentlichen ungehindert. Sie können damit ihre Schadstofffracht auf der Katalysatoroberfläche deponieren. Besonders schädlich für die Katalysatoraktivität ist dabei Staub, der unter anderem aus Ruß (beispielsweise aus Verbrennungsvorgängen und/oder Dieselmotoren), der selbst bis zu etwa 50 % mit sauren Schadstoffen wie SO₂, SO₃, H₂S, COS, NO, NO₂ sowie Cl, HCl, F, HF und halogenierten Kohlenwasserstoffe angereichert ist und ein Partikelspektrum mit mittlerer Größe um 1 µm besitzt. (Diese und alle folgenden Prozentangaben beziehen sich auf das Gewicht.)

Gemäß der Erfindung werden derartige Stäube und/oder Aerosole einer Partikelgröße von weniger als 20 µm, vorzugsweise weniger als 10 µm vor der katalytischen Oxidation durch geeignete Maßnahmen entfernt. Besonders wichtig für die Erhöhung der Katalysatoraktivität ist die Entfernung von Teilchen einer Partikelgröße von 0,05 bis 5 µm, insbesondere im Bereich von 0,1 bis 3 µm. Unter "Entfernung" ist dabei eine Verringerung des Gehalts an den entsprechenden Stäuben und/oder Aerosolen um mindestens 50 % zu verstehen, inbesondere eine Verringerung des Gehalts an Stäuben und Aerosolen einer Partikelgröße zwischen 0,1 und 3 µm um mindestens 50 %, vorzugsweise um mindestens 80 %.

Grundsätzlich können alle bekannten Methoden zur Partikelentfernung eingesetzt werden. Vorzugsweise wird die Entfernung von Stäuben und/oder Aerosolen einer Partikelgröße von weniger als 20 µm mittels eines Waschvorgangs durchgeführt. Als Waschvorgang wird hierbei der direkte Kontakt des Luftstroms mit einer Flüssigkeit bezeichnet; ein Beispiel ist eine Gegenstrom-Wäsche. Die Waschvorrichtung kann je nach Bedarf mit offenem oder geschlossenem Waschmittelkreislauf beziehungsweise mit oder ohne Abschlämmung betrieben werden.

Zwar kann ein konventioneller Rieselkühler, der häufig zur Vorkühlung von Einsatzluft für einen Tieftemperatur-Luftzerlegungsanlage eingesetzt wird, auch als Einrichtung zur Durchführung eines Waschvorgang angesehen werden. Ein solcher Kühler stellt allerdings keine Vorrichtung zur Entfernung von Stäuben und/oder Aerosolen im Sinne der Erfindung dar. Er ist beispielsweise bei weitem nicht in der Lage, den Gehalt an Partikeln einer Größe zwischen 0,1 und 3 µm um mindestens 50 % zu reduzieren.

Als Waschmittel können Wasser, insbesondere übliches Brauchwasser, oder andere geeignete Waschflüssigkeiten mit geeigneten pH-Werten eingesetzt werden.

Besonders bevorzugt wird der Einsatz eines Überlauf-Venturi-Wäschers oder eines Strahl- oder Sprühzonenwäschers. Ein Überlauf-Venturi-Wäscher ist beispielsweise in der Lage, 50 % und mehr an Stäuben einer Partikelgröße zwischen 0,1 und 3 µm abzuscheiden; je nach Einstellung des Druckverlusts können Abscheidegrade von 90 bis 97 % oder höher erreicht werden. Der Abscheidegrad für Aerosole liegt etwas höher als derjenige für Stäube.

Alternativ oder zusätzlich kann zur Partikelentfernung ein elektrostatisches Filter oder ein mechanischer Teilchenabscheider, insbesondere ein Zyklonabscheider oder ein Filter mit feinem faserartigen Filtermaterial eingesetzt werden. Letzteres kann beispielsweise aus einem Gewebe oder Filzmaterial bestehen, das aus langen, dünnen Fasern gefertigt ist.

Selbstverständlich können bei der Erfindung auch mehrere Methoden zur Partikelentfernung in Kombination eingesetzt werden.

Zusätzlich zu der erfindungsgemäßen Entfernung von Stäuben und/oder Aerosolen einer Partikelgröße von weniger als 20 µm ist es günstig, wenn Teilchen einer Partikelgröße von mindestens 20 µm aus dem Luftstrom entfernt werden. Dies kann mit Hilfe üblicher Filtermatten erreicht werden, die beispielsweise vor einem Verdichter zur Komprimierung des Luftstroms angeordnet sind.

Die Erfindung betrifft außerdem eine Vorrichtung zur Entfernung von Kohlenmonoxid und/oder Wasserstoff aus einem Luftstrom gemäß den Patentansprüchen 7 bis 10.

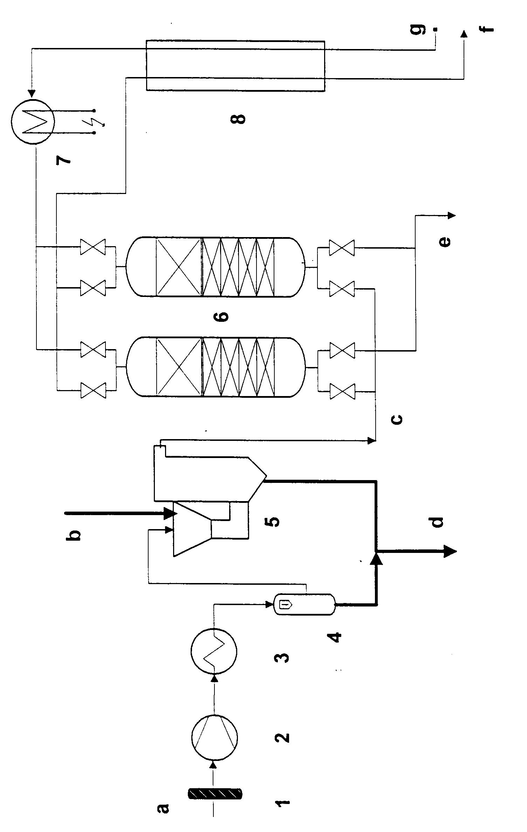

Die Erfindung sowie weitere Einzelheiten der Erfindung werden im folgenden anhand eines in der Zeichnung schematisch dargestellten Ausführungsbeispiels näher erläutert.

Ein Luftstrom a von 7.000 Nm³ durchläuft ein übliches mechanisches Filter 1 und wird dort von Partikeln von 20 µm Durchmesser oder mehr befreit. Anschließend wird er in einem Verdichter 2 auf 10 bar verdichtet. Die verdichtete Luft enthält 0,8 Vppm Wasserstoff und 0,6 Vppm Kohlenmonoxid. Außerdem ist sie mit festen Schadstoffen belastet, insbesondere mit 1.000 µg/m³ (= 8 g/h) Staub mit einer mittleren Partikelgröße von 2 µm. 60 % davon sind Ruß, der mit einer Menge von insgesamt 30 % der Gesamtstaubmasse an SO₂, Cl, F und NOₓ beladen ist. Die Luft enthält außerdem 4 g/h an gasförmigen Schadstoffen, insbesondere NO₂ (0,1 Vppm), SO₂ (0,1 Vppm), H₂S (0,05 Vppm) und Cl (0,05 Vppm).

Nach Entfernung der Verdichtungswärme in einem Kühler 3 und anschließender Abscheidung von flüssigem Wasser in einer Phasentrenneinrichtung 4 tritt die Luft unter einer Temperatur von 20°C in eine Einrichtung 5 zur Entfernung von Stäuben und/oder Aerosolen einer Partikelgröße von weniger als 20 µm ein, die als Überlauf-Venturi-Wäscher mit einem Wasserkreislauf von 2 m³/h, einer 400 mm-Kalotte und einem Wasserabscheider mit 400 mm Durchmesser ausgebildet ist. Wasser wird über Leitung b in den Überlauf-Venturi-Wäscher 5 eingeführt und über Leitung d gemeinsam mit den abgeschiedenen Stäuben und Aerosolen mit dem in der Phasentrenneinrichtung 4 anfallenden Wasser abgezogen. In dieser Waschvorrichtung erleidet der Luftstrom einen Druckverlust von etwa 500 mbar bei einem Staub-Abscheidegrad von 99 % und einen Aerosol-Abscheidegrad in ähnlicher Größenordnung.

Stromabwärts der Wäsche tritt die von Staub und Aerosolen befreite Luft in eine Reinigungseinrichtung 6 ein und durchläuft diese von unten nach oben. Die Reinigungseinrichtung besteht aus zwei Behältern, die wechselweise betrieben werden und in der der Luftstrom nacheinander die folgenden adsorptiven beziehungsweise katalytisch aktiven Schichten durchströmt:
Aktiviertes Aluminiumoxid
Molekularsieb 13X
Hopcalit (CO-Entfernung durch katalytische Oxidation)
Aluminiumoxid mit 0,5 Gew% Pd (H₂-Entfernung durch katalytische Oxidation)
Molekularsieb 13X

Die Behälter werden alle 4 h zwischen Beladen und Regenerieren umgeschaltet. Derjenige Behälter, der momentan nicht mit dem Luftstrom beaufschlagt ist, wird mittels 1.500 bis 2.000 m³/h eines Regeneriergases g regeneriert, das 31 % Sauerstoff und 69 % Stickstoff enthält, unter einem Druck von etwa 1 bar steht und in einer Heizeinrichtung 7 erwärmt wurde. Nach 1,3 h Heizzeit (Regeneriergastemperatur: 130 bis 180°C) schließen sich 2,3 h Kaltspülzeit an (Regeneriergastemperatur: 23°C).

Der Luftstrom enthält nach Durchlaufen der Reinigungseinrichtung weniger als 1 Vppb Wasserstoff und weniger als 1 Vppb Kohlenmonoxid. Er wird durch indirekten Wärmeaustausch 8 - beispielsweise mit dem Regeneriergas g und/oder anderen Rückströmen - abgekühlt und über Leitung f einer Anlage zur Gewinnung hochreinen Stickstoffs durch Tieftemperaturzerlegung zugeführt. Das Regeneriergas kann durch eine Restfraktion der Tieftemperaturzerlegung gebildet werden.

## Patentansprüche

1. Verfahren zur Entfernung von Kohlenmonoxid und/oder Wasserstoff aus einem Luftstrom, bei dem der Luftstrom einer katalytischen Oxidation unterworfen wird, **dadurch gekennzeichnet**, daß stromaufwärts der katalytischen Oxidation Stäube und/oder Aerosole einer Partikelgröße von weniger als 20 µm aus dem Luftstrom entfernt werden.

2. Verfahren nach Anspruch 1, **dadurch gekennzeichnet**, daß die Entfernung von Stäuben und/oder Aerosolen einer Partikelgröße von weniger als 20 µm mittels eines Waschvorgangs durchgeführt wird.

3. Verfahren nach Anspruch 2, **dadurch gekennzeichnet**, daß Wasser als Waschmittel eingesetzt wird.

4. Verfahren nach Anspruch 2 oder 3, **dadurch gekennzeichnet**, daß die Entfernung von Stäuben und/oder Aerosolen einer Partikelgröße von weniger als 20 µm in einem Überlauf-Venturi-Wäscher oder einem Strahl- oder Sprühzonenwäscher durchgeführt wird.

5. Verfahren nach einem der Ansprüche 1 bis 4, **dadurch gekennzeichnet**, daß die Entfernung von Stäuben und/oder Aerosolen einer Partikelgröße von weniger als 20 µm mittels eines elektrostatischen Filters oder mittels eines mechanischen Teilchenabscheiders, insbesondere eines Zyklonabscheiders oder feiner faserartiger Filtermaterialien durchgeführt wird.

6. Verfahren nach einem der Ansprüche 1 bis 5, **dadurch gekennzeichnet**, daß stromaufwärts der Entfernung von Stäuben und/oder Aerosolen einer Partikelgröße von weniger als 20 µm Teilchen einer Partikelgröße von mindestens 20 µm aus dem Luftstrom entfernt werden.

7. Vorrichtung zur Entfernung von Kohlenmonoxid und/oder Wasserstoff aus einem Luftstrom mit Mitteln zur katalytischen Oxidation von Kohlenmonoxid und/oder Wasserstoff, **dadurch gekennzeichnet**, daß den Mitteln zur katalytischen Oxidation Mittel zur Entfernung von Stäuben und/oder Aerosolen einer Partikelgröße von weniger als 20 µm vorgeschaltet sind.

8. Vorrichtung nach Anspruch 7, **dadurch gekennzeichnet**, daß die Mittel zur Entfernung von Stäuben und/oder Aerosolen einer Partikelgröße von weniger als 20 µm als Waschvorrichtung ausgebildet sind.

9. Vorrichtung nach Anspruch 8, **dadurch gekennzeichnet**, daß die Waschvorrichtung als Überlauf-Venturi-Wäscher oder als Strahl- oder Sprühzonenwäscher ausgebildet ist.

10. Vorrichtung nach einer der Ansprüche 7 bis 9, **dadurch gekennzeichnet**, daß Mittel zur Entfernung von Stäuben und/oder Aerosolen einer Partikelgröße von weniger als 20 µm als elektrostatisches Filter oder als mechanischer Teilchenabscheider, insbesondere Zyklonabscheider oder Filter mit feinen faserartiger Filtermaterialien ausgebildet sind.
